# EUROPEAN PATENT APPLICATION

(11) **EP 4 345 145 A1**
(43) Date of publication of application: **03.04.2024**
(21) Application number: 23397506.9
(22) Date of filing: 02.10.2023
(51) Int. Cl.: C09K 3/18, C09K 3/22, C09K 5/00

(54) **DE-ICING, DUST BINDING AND/OR HEAT TRANSFER COMPOSITION**

(30) Priority: 30.09.2022 FI 20225878
(71) Applicant: Kemion OY, 33470 Ylöjärvi (FI)
(72) Inventor: NISSINEN, Timo, 33470 Ylöjärvi (FI); JOKI, Santeri, 33470 Ylöjärvi (FI); KUKKONEN, Jari, 33470 Ylöjärvi (FI)
(74) Representative: Laine IP Oy

(57) **Abstract**

The present invention concerns a composition, especially de-icing composition, comprising the combination of sodium and potassium formate. In particular, the invention concerns use of such composition as a de-icing, dust binding and/or heat transfer composition. Further, the invention concerns a method of producing such composition.

## Description

### Background of the Invention

### Field of Invention

The present invention relates to compositions, in particular to de-icing compositions, comprising the combination of sodium and potassium formate. Such compositions may also act as dust binding and/or heat transfer compositions.

Further, the present invention relates to the use of such composition, in particular as a deicing composition, dust binding composition or heat transfer composition. The invention also concerns the method of manufacturing the composition.

### Description of Related Art

It is a common aim to reduce the negative impacts of traffic and road maintenance for the environment. Thus, biodegradable ice-melting and de-icing products are becoming more and more important and have already been used to replace the commonly used sodium chloride at least in the most important ground water areas.

Since the end of the 90s, potassium formate has been widely used to replace urea at airports as a runway de-icer and later also to replace sodium chloride as a road de-icer. Further, potassium formate has also found use as heat transfer fluid and dust binding material. Potassium formate is a potassium salt of formic acid, which is easily biodegradable and strongly hygroscopic, i.e. absorbs moisture from the air. Due to its strong deliquescent property, it is mainly used as a solution, typically in the eutectic concentration of about 50 wt.%. However, raw material cost of potassium formate has been lately increasing significantly and its availability has weakened.

In addition to potassium formate, sodium formate has been used as a solid de-icer at airports. Recently sodium formate, also being biodegradable, has been raised as an option for potassium formate as a road de-icer in Finland. Unlike potassium formate, sodium formate is not hygroscopic, wherein it is mainly produced and delivered as a solid product. However, sodium formate can also be used as a solution, which provides versatile possibilities considering de-icing in various weather conditions. Its environmental effects, biological degradation and ecology correspond to the ones of potassium formate, mostly due to the similar formate molecular structure. Further, its de-icing capacity is close to sodium chloride, i.e. at a good level.

However, maximum concentration of sodium formate as a liquid de-icer is rather low and its freezing point is not sufficient for severe Nordic winter conditions. Generally, the eutectic concentration of sodium formate water solution is typically seen to be approximately 24 wt.%, wherein the freezing point of around -16 °C is obtained. If sodium formate concentration is increased above 30 wt.%, the freezing point significantly decreases and is no more than about -5 °C, whereas at the concentration of 32 wt.%, the freezing point is already around 0 °C.

Potassium formate liquid, in turn, can be used to decrease the freezing point more efficiently. Typically, commercial potassium formate solutions allow a much higher concentration of the active ingredient having a potassium formate concentration of about 50 wt.%, wherein the freezing point temperatures of around -48 to -60 °C have been measured, depending on the source.

Based on the facts presented above, there is still a need for improvements in the field of deicing compositions.

### Summary of the Invention

It is an aim of the present invention to eliminate at least a part of the disadvantages of the prior art and to provide a novel de-icing composition. Especially, the present invention provides a de-icing composition having optimized freezing point, active ingredient concentration and cost effectiveness. Further, the composition has a low negative impact on the environment.

It is another aim of the present invention to provide a novel dust binding and/or heat transfer composition.

In particular, it is an aim of the invention to use a new kind of composition as de-icing, dust binding and/or heat transfer composition, especially as de-icing composition.

It is still a further aim to provide a method for producing such composition.

The present invention is based on the idea of providing a composition comprising the combination of sodium formate and potassium formate. It has been surprisingly found in the present invention that two known de-icing materials can be combined thereby obtaining an optimized de-icing composition in which the components interact with each other providing new properties compared to the individual components. In particular, the present invention provides an enhanced sodium formate-based composition with potassium formate, wherein freezing point of sodium formate can be further decreased at the same time as increasing the amount of the active ingredient. The combination of sodium and potassium formate has been optimized in the present invention.

Sodium formate is the most affordable formate-based de-icing material. However, by mixing it with potassium formate, the properties of sodium formate can be further improved. Potassium formate has better anti-freeze properties and its eutectic concentration is much higher, wherein it can be used to increase corresponding properties, basically frost resistance and efficiency, of the sodium formate-based composition. Due to good freezing point depression and viscosity profile, the composition is also suitable to be used as a heat transfer composition, especially as a heat transfer fluid. Further, potassium formate is highly hygroscopic, which provides water retention capability for the composition, which in turn facilitates storing of the composition by preventing crystallization of sodium formate. Hygroscopicity of potassium formate also enables good dust binding properties for the composition. Therefore, the composition of the present invention is also suitable to be used in dust binding.

Thus, considerable advantages are obtained by the present invention. The present composition provides good de-icing and ice melting properties, wherein it can be widely used as a de-icer in various conditions. The composition of the present invention enables high concentration of active ingredient and has a frost resistance around -20 °C, which makes the composition very suitable for demanding winter conditions.

Further, the composition is environmentally friendly while preferably being totally biodegradable. Moreover, the composition contains a mixture of sodium and potassium cations, which helps in maintaining the ionic balance in the soil. This balance is needed for favourable growing conditions of trees and plants. Cost efficiency of the composition is also optimized by replacing more expensive potassium formate with sodium formate as much as possible, while still maintaining a high total concentration of active ingredients.

Another advantage for the user is the dual-function nature of the composition, i.e. the functionality both as a de-icing (or anti-freeze) and dust binding agent. This makes the use of the composition more practical as its use can continue through the year for different applications, without the need for different storage tanks for dust binding and de-icing products. In some cases, users can even benefit from both the dust binding and anti-freeze properties at the same time, as conditions can be dry and dusty while still having sub-zero and freezing temperatures.

In the following, the invention will be more closely examined with a detailed description.

### Embodiments

Unless otherwise stated herein or clear from the context, any percentages referred to herein are expressed as percent by weight based on a total weight of the respective composition.

Unless otherwise stated, properties that have been experimentally measured or determined herein have been measured or determined at room temperature. Unless otherwise indicated, room temperature is 20 °C.

The present invention relates to a composition, especially to a de-icing composition, comprising sodium formate and potassium formate, wherein the sodium formate and potassium formate are the active ingredients of the composition. Such composition is based on the idea of enhancing sodium formate solution with potassium formate, in order to achieve a low freezing point and at the same time maximize the concentration of active ingredients in the composition.

In particular, the present invention relates to a de-icing, dust binding and/or heat transfer composition, the same composition being suitable for various applications.

Further, the present invention relates to the use of a composition comprising sodium formate and potassium formate as a de-icing, dust binding and/or heat transfer composition, especially de-icing composition.

According to a preferred embodiment, the composition comprises
- 10 to 25 wt.% of sodium formate, and
- 20 to 40 wt.% of potassium formate,
calculated from the total weight of the composition.

According to one embodiment, the composition comprises at least 10 wt.%, such as at least 12 wt.%, such as at least 15 wt.%, such as at least 17 wt.%, such as at least 20 wt.%, such as at least 22 wt.%, of sodium formate, calculated from the total weight of the composition.

According to one embodiment, the composition comprises less than 25 wt.%, such as less than 24 wt.%, such as less than 20 wt.%, such as less than 17 wt.%, such as less than 15 wt.%, of sodium formate, calculated from the total weight of the composition.

Thus, according to one embodiment, the composition comprises 10 to 25 wt.%, such as 10 to 20 wt.% or 15 to 25 wt.% or 10 to 22 wt.%, of sodium formate, calculated from the total weight of the composition.

According to one embodiment, the composition comprises at least 20 wt.%, such as at least 25 wt.%, such as at least 30 wt.%, such as at least 35 wt.%, such as at least 38 wt.%, of potassium formate, calculated from the total weight of the composition.

According to one embodiment, the composition comprises less than 40 wt.%, such as less than 35 wt.%, such as less than 30 wt.%, such as less than 25 wt.%, such as less than 22 wt.%, of potassium formate, calculated from the total weight of the composition.

Thus, according to one embodiment, the composition comprises 20 to 40 wt.%, such as 20 to 35 wt.% or 25 to 40 wt.% or 20 to 30 wt.% or 25 to 35 wt.% or 25 to 30 wt.%, of potassium formate, calculated from the total weight of the composition.

In one embodiment, the total concentration of the active ingredient(s) is optimized to be as high as possible in the present invention for the combination of sodium and potassium formate. According to one embodiment, the total amount of the active ingredients, especially sodium and potassium formate, is at least 35 wt.%, such as at least 40 wt.%, such as at least 45 wt.%, such as at least 50 wt.%, such as at least 55 wt.%, such as at least 60 wt.%, calculated form the total weight of the composition.

According to one embodiment, the total amount of sodium and potassium formate, is at least 35 wt.%, calculated form the total weight of the composition. According to a further embodiment, the total amount of sodium and potassium formate, is at least 35 to 50 wt.%, preferably 35 to 45 wt.%, more preferably 40 to 45 wt.%, calculated form the total weight of the composition.

According to one embodiment, the total amount of sodium and potassium formate, is 35 to 50 wt.%, preferably 35 to 45 wt.%, more preferably 40 to 45 wt.%, calculated form the total weight of the composition.

According to one embodiment, the total amount of the active ingredients, i.e. sodium formate and potassium formate, is 35 to 60 wt.%, preferably 35 to 55 wt.%, such as 35 to 50 wt.%, calculated from the total weight of the composition.

Thus, according to a preferred embodiment, the present invention concerns a de-icing and/or dust binding composition comprising
- 10 to 25 wt.% of sodium formate, and
- 20 to 40 wt.% of potassium formate,
wherein the total amount of the active ingredients, i.e. sodium and potassium formate, is at least 35 wt.%, calculated from the total weight of the composition.

According to a further embodiment, the composition comprises
- 10 to 20 wt.%, for example 10 to 15 wt.%, such as 15 wt.%, of sodium formate, and
- 20 to 35 wt.%, for example 25 to 30 wt.%, such as 25 wt.%, of potassium formate, calculated from the total weight of the composition.

According to one embodiment, the composition comprises
- 10 to 25 wt.%, for example 15 to 25 wt.%, of sodium formate, and
- 25 to 40 wt.%, for example 25 to 35 wt.%, of potassium formate,
calculated from the total weight of the composition, the total amount of the active ingredients, i.e. sodium formate and potassium formate, preferably being at least 35 wt.%, more preferably at least 40 wt.%, such as at least 50 wt.%, calculated from the total weight of the composition.

As being said, the de-icing composition of the invention is based on the combination of sodium formate and potassium formate acting as active ingredients of the composition. However, according to one embodiment, the composition may further comprise other active ingredients, i.e. secondary active ingredient(s). Such secondary active ingredient(s) may be for example some other salt of carboxylic acid, or polyol, such as glycerol or propylene glycol, preferably glycerol, or a mixture thereof. Such optional secondary active ingredients may be used to provide further anti-freeze and corrosion resistance properties for the composition. Also other active ingredients can be used.

According to one embodiment the other salt of carboxylic acid is sodium acetate, potassium acetate or a combination thereof.

In one embodiment, the amount of the secondary active ingredient(s) is in the range of 0.1 to 25wt.%, for example 1 to 15 wt.%, such as 2 to 10 wt.%, calculated from the total weight of the composition.

According to one embodiment, the total amount of the active ingredients, including sodium formate, potassium formate and secondary active ingredient(s) is at least 35 wt.%, preferably 35 to 60 wt.%, more preferably 35 to 50 wt.%, for example 40 to 45 wt.%, calculated from the total weight of the composition.

In the present invention the weight ratio of sodium and potassium formate is decided based on optimizing the performance of the composition, especially as a de-icing composition.

In one embodiment, the weight ratio of sodium formate to potassium formate is in the range of 1:1 to 1:4, preferably in the range of 1:1 to 1:2, more preferably in the range on 1:1.25 to 1:1.75. Thus, according to a preferred embodiment, the composition comprises an equal amount or less sodium formate than potassium formate.

According to one embodiment, the composition is in the form of a solution, preferably in the form of an aqueous solution. Both sodium formate and potassium formate particles are soluble in water, wherein a homogeneous aqueous solution is obtained. Thus, according to one embodiment, the composition includes sodium formate, potassium formate and water, preferably without any additional components.

According to one embodiment, the composition comprises 20 to 70 wt.% of water, preferably 30 to 60 wt.% of water, more preferably 40 to 60 wt.% of water, for example 50 to 60 wt.% of water, calculated from the total weight of the composition.

Thus, according to one embodiment, the composition includes
- 10 to 25 wt.%, preferably 10 to 20 wt.%, for example 10 to 15 wt.%, of sodium formate,
- 20 to 40 wt.%, preferably 20 to 35 wt.%, for example 25 to 30 wt.%, of potassium formate, and
- 20 to 70 wt.%, preferably 30 to 60 wt.%, for example 40 to 60 wt.%, of water,
calculated from the total weight of the composition.

According to a further embodiment, the composition comprises
- 15 wt.% of sodium formate,
- 25 wt.% of potassium formate, and
- 60 wt.% of water,
calculated from the total weight of the composition. The composition according to this embodiment has freezing point -20 °C. This composition is especially suitable to be used as a de-icing composition since it provides frost resistance of at least -20 °C, total concentration of at least 40 wt.% and simultaneously sodium formate concentration is maximized for cost efficiency.

According to one embodiment, the composition comprises
- 10 wt.% of sodium formate,
- 30 wt.% of potassium formate, and
- 60 wt.% of water,
calculated from the total weight of the composition. This composition is especially suitable to be used as a heat transfer composition due to low freezing point and viscosity.

According to one embodiment, the composition comprises
- 15 wt.% of sodium formate,
- 20 wt.% of potassium formate, and
- 65 wt.% of water,
calculated from the total weight of the composition. This composition is especially suitable to be used as a dust binding composition being ready-to-use and cost efficient.

Properties of the composition are defined by the combination of sodium formate and potassium formate. According to a preferred embodiment, the composition comprising sodium and potassium formate is such that the composition has a freezing point of at least -10 °C, preferably at least -15 °C, more preferably at least -20 °C. Freezing point describes the frost resistance of the composition, i.e. how low temperatures the composition tolerates before a liquid changes into a solid and loses its ability to act as a de-icing composition. Frost resistance is the temperature at which the formation of first crystals is observed. Thus, freezing point can be measured by visually observing formation of crystals while lowering the temperature.

According to one embodiment, the composition has pH in the range of 6 to 12, preferably 7 to 11, for example in the range of 8 to 10, and electrical conductivity is preferably in the range of 100 to 270, more preferably in the range of 120 to 260 mS/cm. pH and electrical conductivity can be measured straight from the solution with pH and conductivity meters. By optimizing these properties, it is possible to minimize the corrosion of materials in contact with the solution.

The composition of the invention preferably has a moisture retention capacity of at least 30 wt.%, more preferably at least 40 wt.%, for example at least 45 wt.%, of its original water content, the water retention capacity being measured at room temperature, at a relative humidity of about 50 %, after the composition has achieved an equilibrium state. Water retention capacity enables the composition to maintain its liquid state, which in turn provides dust binding properties.

According to one embodiment, the composition may further comprise additives, such as a corrosion protection agent or a colouring agent. Corrosion protection agent may especially be used in heat transfer compositions or in general in environments where corrosion protection is required, such as at airport winter maintenance. Optional additives may be present for example in the amount of 0.005 to 5 wt.%, preferably in the amount of 0.1 to 5 wt.%, such as 0.5 to 2 wt.%, calculated from the total weight of the composition.

According to one embodiment, the composition further comprises a viscosity increasing agent, preferably selected from biopolymers, especially from cellulose derivatives, such as microfibrillated cellulose (MFC), for example in an amount of 0.1 to 10 wt.%, such as 0.5 to 5 wt.%, calculated from the total weight of the composition. In some embodiment, higher viscosity of the composition is needed for better hold-over performance on inclined surfaces. MFC is an environmentally friendly and effective viscosity modifier that has shear thinning properties. This enables easy dosing of composition by traditional spraying systems.

As being said, the composition described above may be a de-icing composition, dust binding composition or a heat transfer composition. The composition having beneficial properties for each of these applications. In particular, the composition acts as a de-icing composition having optimized freezing point, active ingredient concentration and cost effectiveness. For dust binding applications, hygroscopicity provided by potassium formate is essential, whereas as for a heat transfer fluid the present composition provides sufficient frost resistance and low viscosity. In one embodiment, the same composition may be used in two or more applications simultaneously, such as a de-icer and dust control agent. According to one embodiment, the same composition is used both as a de-icing and dust binding composition, optionally the composition is simultaneously used as a de-icing and dust binding composition.

According to one embodiment, the composition is used as a de-icing composition, the composition having a freezing point of at least - 20 °C.

In one specific embodiment, the composition of the present invention is especially suitable as a de-icing composition for runways and taxiways at airports. Currently major product in this application is 50% potassium formate solution. In one embodiment, the idea is to change typical runway de-icer formulation by replacing part of the potassium formate with sodium formate. Due to the lower cost of sodium, total product costs can be affected positively and at the same time save earth's potassium resources for other applications, such as fertilizers. Furthermore, an appropriate balance of sodium and potassium ions is also more beneficial for the soil and vegetation in the airport environment. In one embodiment, the idea has been to develop a new de-icing composition, in particular a deicing solution, for airports by keeping the total formate concentration at up to 50 wt.%, preferably in the range of 40 to 50 wt.%.

Thus, in one embodiment, the composition comprises
- 15 to 30 wt.%, preferably 15 to 25 wt.%, of sodium formate, and
- 20 to 35 wt.%, preferably 25 to 35 wt.%, of potassium formate,
the total amount of the active ingredients, i.e. sodium formate and potassium formate, being in the range of 40 to 50 wt.%, the weight percentages being calculated from the total weight of the composition. The composition may further comprise an additive, in particular a corrosion protection agent/ corrosion inhibitor and/or a pH buffering agent, preferably in a total amount of 0.005 to 2 wt.%, in particular in an amount of 0.5 to 2 wt.%, calculated from the total weight of the composition. The rest of the composition preferably being water.

According to one embodiment, such composition has a freezing point of at least -14.5 °C, preferably at least -15 °C, more preferably at least -16 °C, when diluted with water in weight ratio of 1:1.

Thus, in one embodiment, the composition of the present invention diluted in water in weight ratio of 1:1 meets the AMS 1435 standard (concerning deicing and anti-icing runways and taxiways in the form of a fluid), i.e. provides a frost resistance of at least -14.5 °C.

In one embodiment, the composition comprises
- 10 to 25 wt.% of sodium formate,
- 20 to 40 wt.% of potassium formate, and
- 0.5 to 2 wt.% of corrosion protection agent(s) and/or pH buffering agent(s),
the weight percentages being calculated from the total weight of the composition. In one embodiment, this composition is especially suitable to be used as a de-icing composition on airport runways and taxiways.

The present invention also relates to the use of the composition according to any of the embodiments described in the present application.

In one particular embodiment, the present invention concerns the use of the composition of the present invention as a de-icing composition on airport runways and taxiways.

In a further embodiment, the present invention concerns the use of the composition of the present invention as a de-icing composition on airport runways and taxiways, wherein the composition diluted with water in weight ratio of 1:1 has a freezing point of at least -15 °C, preferably at least -16 °C.

Further, the present invention relates to a method of producing the composition according to the invention, i.e. according to any of the embodiments described above.

Thus, the present invention relates to a method of producing a composition, especially a de-icing, dust binding and/or heat transfer composition, comprising sodium formate and potassium formate.

According to one embodiment the method comprises the steps of
- providing a sodium formate solution by dissolving sodium formate in water,
- providing an aqueous potassium formate solution,
- combining said solutions by mixing.

Thus, according to one embodiment sodium formate in solid form, preferably as a powder, is first dissolved in water. In one embodiment, a sodium formate solution having a concentration of 5 to 40 wt.%, preferably 20 to 35 wt.%, more preferably 24 to 32 wt.%, calculated from the total weight of the sodium formate solution, is formed.

In one embodiment, such sodium formate solution is combined with an aqueous potassium formate solution preferably having a concentration of 40 to 80 wt.%, preferably 50 to 75 wt.%, more preferably 50 wt.%, calculated form the total weight of the potassium formate solution. Potassium formate solution can be added to the sodium formate solution or other way around.

According to another embodiment, solid sodium formate is added into an aqueous potassium formate solution and dissolves therein.

According to one embodiment, the amount of water can be adjusted after combining the solutions of sodium and potassium formats, or alternatively after adding solid sodium formate into the aqueous potassium solution. By optimizing the concentrations of the sodium and potassium formate solutions, as described above, the step of adjusting amount of water can be avoided. According to a preferred embodiment, the water content is such that the total amount of the active ingredients, i.e. sodium and potassium formate, is at least 35 wt.%, calculated from the total weight of the composition.

According to one embodiment, the method comprises the steps of
- providing a sodium formate solution by dissolving sodium formate in water,
- providing an aqueous potassium formate solution,
- combining said solutions by mixing, while adjusting the water content.

In one embodiment, the method further comprises adding a secondary active ingredient(s), viscosity increasing agent, or other additive(s) in the composition.

According to one embodiment, the method of producing the de-icing, dust binding and/ or heat transfer composition according to the present invention, comprising the steps of
- providing a sodium formate solution by dissolving sodium formate in water, the solution preferably having a concentration of 5 to 40 wt.%, more preferably 20 to 35 wt.%, for example 24 to 33 wt.%,
- providing an aqueous potassium formate solution, the solution preferably having a concentration of 40 to 80 wt.%, preferably 50 to 75 wt.%, more preferably 50 wt.%
- combining said solutions by mixing, and optionally adjusting the amount of water and/or adding additives.

### Examples

### Example 1. Preparation of liquid compositions.

Liquid, aqueous, compositions of potassium formate, sodium formate and mixtures of potassium and sodium formate at various concentrations were prepared. First, a liquid solution with 29.4 wt.% of sodium formate in water was prepared by dissolving solid sodium formate in water. Then, such sodium formate solution (Nafo), a solution with 75 wt-% of potassium formate (Kfo) and water were used to prepare the compositions A-K according to table 1.

**Table 1. Compositions A-K**

| | **Mass percentage (wt.%)** | | | **m (g)** | | | |
|---|---|---|---|---|---|---|---|
| **Composition** | **Total solids concentration** | **Nafo** | **Kfo** | **Nafo 29,4 %** | **Kfo 75 %** | **Water** | **Total** |
| *A* | 24 % | 24.00 % | 0.00 % | 163.27 | 0.00 | 36.73 | 200 |
| *B* | 35 % | 20.00 % | 15.00 % | 136.05 | 40.00 | 23.95 | 200 |
| *C* | 35 % | 17.50 % | 17.50 % | 119.05 | 46.67 | 34.29 | 200 |
| *D* | 35 % | 15.00 % | 20.00 % | 102.04 | 53.33 | 44.63 | 200 |
| *E* | 40 % | 15.00 % | 25.00 % | 102.04 | 66.67 | 31.29 | 200 |
| *F* | 40 % | 12.50 % | 27.50 % | 85.03 | 73.33 | 41.63 | 200 |
| G | 40 % | 12.00 % | 28.00 % | 81.63 | 74.67 | 43.70 | 200 |
| *H* | 40 % | 11.00 % | 29.00 % | 74.83 | 77.33 | 47.84 | 200 |
| *I* | 40 % | 10.00 % | 30.00 % | 68.03 | 80.00 | 51.97 | 200 |
| *J* | 40 % | 0.00 % | 40.00 % | 0.00 | 106.67 | 93.33 | 200 |
| *K* | 50 % | 0.00 % | 50.00 % | 0.00 | 133.33 | 66.67 | 200 |

### Example 2. Freezing point/ crystallization temperatures

Freezing or crystallization temperatures, for liquid compositions of potassium formate, sodium formate and mixtures thereof at various concentrations were measured in a laboratory grade freezer. The compositions A-K according to example 1 were placed in the freezer in closed containers. Initial temperature was set at -10 °C and temperatures of the solutions were monitored with an accurate low temperature thermometer. After all the solutions had reached the target temperature of -10 °C, it was kept constant for at least one hour before lowering the temperature by 1 °C at a time. The solutions were stirred or shaken regularly during the measurements and small amounts of solid sodium formate crystals were added into the solutions to prevent supercooling of the solutions at each temperature.

The solutions were monitored visually for signs of ice or crystal formation. The temperature, where the formation of crystals or ice was first monitored was recorded as the freezing point or crystallization temperature of the solution. After the preferred minimum temperature of -20 °C was reached, the temperature of the freezer was set to -30 °C (that is why some of the freezing/crystallization temperatures in table 2 are given as a range). At this temperature, all solutions except solutions J and K had frozen or crystallized. Crystal formation in composition E started shortly after its temperature dropped below -20 °C. Compositions containing a higher potassium to sodium ratio had lower crystallization temperatures. Results are presented in table 2.

**Table 2. Results of freezing point/ crystallization temperature measurement of compositions A-K.**

| **Composition** | **Total solids concentration (wt.%)** | **Nafo (wt.%)** | **KFO (wt.%)** | **Freezing/ crystallization temperature (°C)** |
|---|---|---|---|---|
| *A* | 24 % | 24.00 % | 0.00 % | -16 |
| *B* | 35 % | 20.00 % | 15.00 % | -15 |
| *C* | 35 % | 17.50 % | 17.50 % | -18 |
| *D* | 35 % | 15.00 % | 20.00 % | -20 to -30 |
| *E* | 40 % | 15.00 % | 25.00 % | -20 |
| *F* | 40 % | 12.50 % | 27.50 % | -20 to -30 |
| *G* | 40 % | 12.00 % | 28.00 % | -20 to -30 |
| *H* | 40 % | 11.00 % | 29.00 % | -20 to -30 |
| *I* | 40 % | 10.00 % | 30.00 % | -20 to -30 |
| *J* | 40 % | 0.00 % | 40.00 % | -30 to -40 |
| *K* | 50 % | 0.00 % | 50.00 % | -40 to -50 |

### Example 3. Ice melting capacity

Ice melting capacity of compositions *A*, *E*, *J* and *K* was tested with an ice melting experiment performed in a laboratory grade freezer. Water was added to small plastic vessels in an amount of 20 g each. Temperature of the freezer was set at -5 °C and the water vessels were placed inside the freezer and allowed to freeze. 5 g of each ice melting solution was weighed into small vessels, and they were placed in the same freezer to cool them down. Before starting the experiment, each ice vessel was weighed, and the exact total weight was recorded.

The ice melting experiment was performed by pouring the solutions over the ice samples. The samples were kept in the freezer during the experiment. After 10 minutes, the solutions and all the ice melted by the solution was poured out of the cups and they were weighed again. The weight difference of ice before and after the experiment is equal to the amount of ice melted by the solutions.

According to the experiment, the 24 wt.% sodium formate solution has the lowest ice melting capacity, and the 50 wt.% potassium formate has the highest capacity. The 40 wt.% compositions *E* and *J* have a similar melting capacity, even though the composition containing only potassium formate has a lower freezing point. These results indicate that at least in typical de-icing conditions (temperatures of -5 °C and higher) the ice melting capacity of formate solutions is mainly dependent on the concentration of the solution and not the freezing point. Results are presented in table 3.

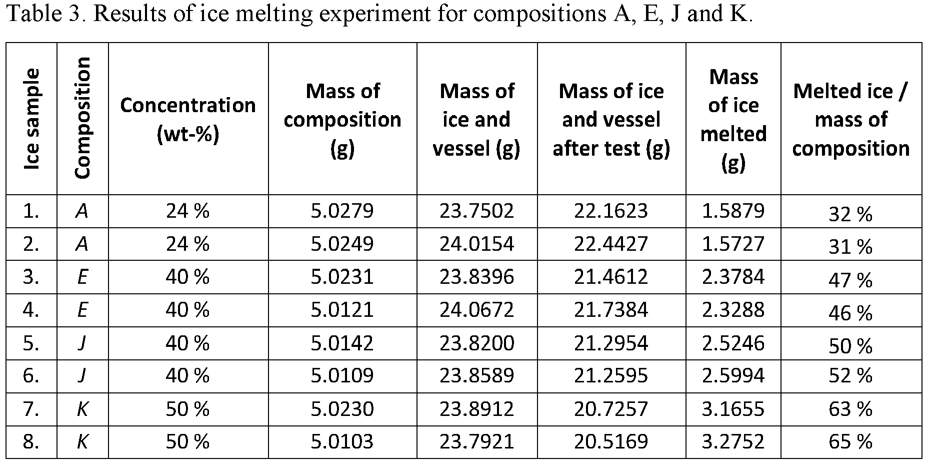

### Example 4. Water retention capacity

Water retention capacity of compositions E and K were tested by placing a known amount of each composition into open vessels in room temperature conditions. The weight of the compositions was monitored for 12 months to see what kind of moisture balance they would reach. Water retention capacity was defined as the mass ratio of final water content divided by initial water content. Final concentrations of the compositions were calculated from weight loss data.

Composition E (mixture of sodium and potassium formate, total concentration 40 wt.%) reached a final concentration of 60 wt.% and had a water retention capacity of 45 %. Composition K (50 wt.% potassium formate) reached a final concentration of 73 wt.% and had a water retention capacity of 38 %. Surprisingly it was found that the composition containing sodium formate had a higher water retention capacity, even though a water solution of sodium formate has no water retention capacity on its own and over time will lose all its water and crystallize. Results are shown in table 4.

**Table 4. Water retention capacity of composition E and K.**

| **Composition** | **Initial mass (g)** | **Final mass (g)** | **Initial concentration (wt.%)** | **Final concentration (wt.%)** | **Water retention** |
|---|---|---|---|---|---|
| *E* | 340 | 228 | 40 % | 60 % | 45 % |
| *K* | 343 | 236 | 50 % | 73 % | 38 % |

### Example 5. Viscosity

Dynamic viscosities at 0 °C for compositions E and J were measured with a rotational viscometer (device name, IKA Rotavisc Lo-vi). For composition E, dynamic viscosity is 5,5 mPa•s and for composition J dynamic viscosity is 3,2 mPa•s. Both values can be considered to be relatively low, which is advantageous for use as a heat transfer fluid.

### Example 6. Airport application

Typically, a 50 % potassium formate solution (Composition K in table 5) is used as a deicing composition on airport runways and taxiways. In this experiment, properties of such de-icing composition was compared to the composition of the present invention, i.e. part of the potassium formate was replaced with sodium formate. Thus, compositions L to P according to Table 5 were prepared. Freezing points of the compositions, in particular solutions, were tested with reference to the runway de-icer standard AMS 1435. According to the standard, the freezing point of the fluid diluted 1:1 by weight should be lower than - 14.5 °C. The results are presented in table 6.

**Table 5. Compositions K to O.**

| | **Mass percentage (wt-%)** | | | **m (g)** | | | |
|---|---|---|---|---|---|---|---|
| **Composition** | **Total solids concentration** | **Nafo** | **Kfo** | **Nafo 97%** | **Kfo 75%** | **Water** | **Total** |
| *K* | 50 % | 0,00 % | 50,00 % | 0 | 666,7 | 333,3 | 1000 |
| *L* | 50 % | 15,00 % | 35,00 % | 154,6 | 466,7 | 378,7 | 1000 |
| *M* | 50 % | 20,00 % | 30,00 % | 206,2 | 400 | 393,8 | 1000 |
| *N* | 50 % | 25,00 % | 25,00 % | 257,7 | 333,3 | 408,9 | 1000 |
| *O* | 50 % | 30,00 % | 20,00 % | 309,3 | 266,7 | 424,1 | 1000 |

**Table 6. Results of crystallization! freezing point measurement for compositions P to T.**

| | | **Mass percentage (wt-%)** | | | |
|---|---|---|---|---|---|
| **Composition** | **Diluted form solution (ratio 1:1)** | **Total solids concentration** | **Nafo** | **Kfo** | **Crystallization temperature (°C)** |
| *P* | *K* | 25 % | 0,00 % | 25,00 % | < -15 |
| *Q* | *L* | 25 % | 7,50 % | 17,50 % | < -17 |
| *R* | *M* | 25 % | 10,00 % | 15,00 % | < -17 |
| *S* | *N* | 25 % | 12,50 % | 12,50 % | < -17 |
| *T* | *O* | 25 % | 15,00 % | 10,00 % | < -17 |

Thus, the results show that all the compositions P to T meet the AMS 1435 standard requirement of the freezing temperature.

Further, it was observed that the freezing points of the diluted compositions according to the present invention (compositions Q to T) have even improved frost resistance compared to pure potassium formate solution (composition P). Composition P has a freezing point of about -15 to -16 °C, whereas freezing points of the compositions Q to T seems to go below that, i.e. at least to -17 °C, the compositions still being in form of a solution at that temperature. Composition P is already frozen at a temperature of -16 °C. This property improves anti-slip properties of the compositions according to the present invention when the composition starts to dilute by the melting of ice.

Thus, it has been surprisingly found in the present invention that a frost resistance of typical diluted potassium formate de-icing solutions improves when part of the potassium formate is replaced with sodium formate according to the present invention. This is especially beneficial in terms of that a corrosion protection agent typically added in airport de-icing compositions may slightly reduce the frost resistance of the composition, however, this reduction is compensated with the improved frost resistance obtained by the diluted composition of the present invention having part of the potassium formate replaced with sodium formate.

## Claims

1. A de-icing, dust binding and/or heat transfer composition comprising
- 10 to 25 wt.% of sodium formate, and
- 20 to 40 wt.% of potassium formate,
wherein the total amount of the active ingredients, i.e. sodium and potassium formate, is at least 35 wt.%, calculated from the total weight of the composition.

2. The composition according to claim 1, wherein the total amount of the active ingredients, i.e. sodium and potassium formate, is 35 to 50 wt.%, preferably 40 to 45 wt.%, calculated from the total weight of the composition.

3. The composition according to claim 1 or 2, wherein the composition further comprises a secondary active ingredient(s), such as some other salt of carboxylic acid, or polyol, such as glycerol or propylene glycol, preferably glycerol, or mixture thereof.

4. The composition according to claim 3, wherein the other salt of carboxylic acid is selected from the group consisting of sodium acetate, potassium acetate and mixtures thereof.

5. The composition according to any of the preceding claims, wherein the weight ratio of sodium formate to potassium formate is in the range of 1:1 to 1:4, preferably in the range 1:1 to 1:2, more preferably in the range of 1:1.25 to 1:1.75.

6. The composition according to any of the preceding claims, wherein composition comprises
- 10 to 20 wt.%, for example 10 to 15 wt.%, such as 15 wt.%, of sodium formate, and
- 20 to 35 wt.%, for example 25 to 30 wt.%, such as 25 wt.%, of potassium formate,
calculated from the total weight of the composition.

7. The composition according to any of the preceding claims, wherein the composition is in the form of a solution, in particular aqueous solution.

8. The composition according to any of the preceding claims, wherein the composition comprises 20 to 70 wt.% of water, preferably 30 to 60 wt.%, most preferably 40 to 60 wt.% of water, for example 50 to 60 wt.% of water, calculated from the total weight of the composition.

9. The composition according to any of the preceding claims, wherein the composition has freezing point of at least -10 °C, preferably at least -15 °C, most preferably at least -20 °C, pH in the range of 6 to 12, electrical conductivity in the range of 100 to 270 mS/cm.

10. The composition according to any of the preceding claim, wherein the composition has a moisture retention capacity of at least 30 wt.%, preferably at least 40 wt.%, for example at least 45 wt.%, of its original water content, measured at room temperature, at a relative humidity of about 50 %.

11. The composition according to any of the preceding claims, wherein the composition further comprises a viscosity increasing agent, preferably selected from biopolymers, especially from cellulose derivatives, such as microfibrillated cellulose (MFC), for example in an amount of 0.1 to 10 wt.%, such as 0.5 to 5 wt.% calculated from the total weight of the composition.

12. The composition according to any of the preceding claims, wherein the composition further comprises additives, in particular a corrosion protection agent, for example in an amount of 0.1 to 5 wt.%, such as 0.5 to 2 wt.%, calculated from the total weight of the composition.

13. A use of the composition according to any of the preceding claims as a de-icing, dust binding and/or heat transfer composition, in particular as de-icing composition, more particularly as a de-icing composition at airport runways and taxiways.

14. The use according to claim 13, wherein the same composition is used both as a de-icing and dust binding composition, optionally the composition is simultaneously used as a deicing and dust binding composition.

15. A method of producing the de-icing, dust binding and/ or heat transfer composition according to any of claims 1 to 12, comprising the steps of
- providing a sodium formate solution by dissolving sodium formate in water, the solution preferably having a concentration of 5 to 40 wt.%, more preferably 20 to 35 wt.%, for example 24 to 33 wt.%,
- providing an aqueous potassium formate solution, the solution preferably having a concentration of 40 to 80 wt.%, preferably 50 to 75 wt.%, more preferably 50 wt.%
- combining said solutions by mixing, and optionally adjusting the amount of water and/or adding additives.
